# EUROPEAN PATENT APPLICATION

(11) **EP 2 579 648 A1**
(43) Date of publication of application: **10.04.2013**
(21) Application number: 11789763.7
(22) Date of filing: 30.05.2011
(51) Int. Cl.: H04W 36/14, H04W 48/18

(54) **MOBILE COMMUNICATION METHOD, MOBILITY MANAGEMENT APPARATUS AND RADIO BASE STATION**

(30) Priority: 04.06.2010 JP 2010128774
(71) Applicant: NTT DOCOMO, INC., Chiyoda-ku Tokyo 100-6150 (JP)
(72) Inventor: NISHIDA, Katsutoshi, Tokyo 100-6150 (JP); KAWAKATSU, Shimpei, Tokyo 100-6150 (JP)
(74) Representative: HOFFMANN EITLE
(86) International application number: PCT/JP2011/062395
(87) International publication number: WO 2011/152360

(57) **Abstract**

To enable a UE (10) of an idle state to establish "E-RAB" for CS fallback processing while considering a multi-level priority set on a call reception signal of a circuit switching scheme, a method has the steps of in an MME (90) of an LTE scheme, setting a priority to establish "E-RAB" based on "eMLPP Priority" included in "Paging Request" from an MSC/VLR (40), in the MME (90,) sending "S1AP: Initial Context Setup" including the set priority, requesting to switch a communication scheme of the UE (10) from the LTE scheme to a UTRAN/GERAN scheme, to an eNodeB (60), in the eNodeB (60), establishing the "E-RAB" by the priority included in the "S1AP: Initial Context Setup", and switching the communication scheme of the UE (10) from the LTE scheme to the UTRAN/GERAN scheme.

## Description

### Technical Field

The present invention relates to a mobile communication method, mobility management apparatus and radio base station to perform call reception control using CS fallback processing.

### Background Art

In recent years, call reception control schemes using CS (Circuit Switched) fallback processing have been studied (for example, Non-patent Document 1). In the call reception control schemes, when a call reception signal of the circuit switching scheme is received, a mobile terminal locating in an LTE (Long Term Evolution) system that does not support the circuit switching scheme performs handover to a UTRAN/GERAN (UTRAN: Universal Terrestrial Radio Access Network, GERAN: GSM EDGE Radio Access Network) system that supports the circuit switching scheme, and thereby performs call reception processing of the call reception signal.

Further, in such a voice call reception scheme, in the case that a call reception signal of the circuit switching scheme is received and that the mobile terminal locating in the LTE system is in an idle state, the mobile terminal in the idle state establishes a radio access bearer (E-RAB: EPS Radio Access Bearer) of the LTE scheme, then performs handover from the LTE system to the UTRAN/GERAN system, and performs call reception processing of the call reception signal.

### Prior Art Literature

### Non-patent Literature

[Non-patent Document 1] 3GPP TS23.272

### Summary of Invention

### Technical Problem

However, in the above-mentioned call reception control scheme, even when a priority of multi-level is set on a call reception signal of the circuit switching scheme, for a mobile terminal of an idle state locating in an LTE system, the network is not able to establish a radio access bearer (E-RAB) of the LTE scheme while considering the priority of multi-level, and there is a problem that it is not possible to perform CS fallback processing corresponding to the priority during the radio congestion or the like.

The present invention was made in view of such a problem, and it is an object of the invention to provide a mobile communication method, mobility management apparatus and radio base station for enabling a network to establish a radio access bearer (E-RAB) of an LTE scheme on a mobile terminal of an idle state locating in the LTE system, while considering a priority of multi-level, when the priority of multi-level is set on a call reception signal of a circuit switching scheme.

### Solution to the Problem

It is a subject matter of a mobile communication method according to a first aspect of the invention that the method has the steps of in a mobility management apparatus of a first communication scheme, receiving a connection request signal for requesting connection to a mobile switching station, from a mobile terminal that receives a paging signal sent in response to a paging request signal from the mobile switching station of a second communication scheme, in the mobility management apparatus, setting a priority to establish a bearer of the first communication scheme based on a multi-level priority included in the paging request signal from the mobile switching station, in response to the connection request signal from the mobile terminal, in the mobility management apparatus, sending a switch request signal, which includes the set priority and requests to switch a communication scheme of the mobile terminal from the first communication scheme to the second communication scheme, to a radio base station of the first communication scheme, in the radio base station, establishing a bearer of the first communication scheme by the priority included in the switch request signal, and switching the communication scheme of the mobile terminal from the first communication scheme to the second communication scheme.

According to this configuration, when the priority of multi-level is set on a call reception signal received in the mobile switching station of the second communication scheme, the priority to establish the bearer of the first communication scheme is set so as to indicate the priority of the same level as the priority of multi-level. Accordingly, it is possible to establish the bearer of the first communication scheme while considering thepriorityof multi-level set on the call reception signal received in the mobile switching station of the second communication scheme. As a result, when a call reception signal of a high priority is received in the mobile switching station of the second communication scheme, it is possible to prevent the occurrence of CS fallback processing failure due to failure of bearer establishment of the first communication scheme.

It is a subject matter of a mobility management apparatus according to a second aspect of the invention that the apparatus is a mobility management apparatus of a first communication scheme, and has a reception section configured to receive a connection request signal for requesting connection to a mobile switching station, from a mobile terminal that receives a paging signal sent in response to a paging request signal from the mobile switching station of a second communication scheme, a set section configured to set a priority to establish a bearer of the first communication scheme based on a multi-level priority included in the paging request signal from the mobile switching station, in response to the connection request signal from the mobile terminal, and a transmission section configured to send a switch request signal, which includes the set priority and requests to switch a communication scheme of the mobile terminal from the first communication scheme to the second communication scheme, to a radio base station of the first communication scheme.

It is a subject matter of a radio base station according to a third aspect of the invention that the radio base station is a radio base station of a first communication scheme, and has a reception section configured to receive a switch request signal for requesting to switch a communication scheme of a mobile terminal from the first communication scheme to a second communication scheme, from a mobility management apparatus of the first communication scheme, an establishment processing section configured to perform processing for establishing a bearer of the first communication scheme in response to the switch request signal, wherein the switch request signal includes a priority to establish the bearer of the first communication scheme, the priority set based on a multi-level priority included in a paging request signal from a mobile switching station of the second communication scheme, and the establishment processing section is configured to perform the processing for establishing the bearer of the first communication scheme by the priority included in the switch request signal.

### Technical Advantages of the Invention

According to the invention, it is possible to provide a mobile communication method and mobility management apparatus for enabling a network to establish a radio access bearer (E-RAB) of an LTE scheme on a mobile terminal of an idle state locating in the LTE system, while considering a priority of multi-level, when the priority of multi-level is set on a call reception signal of a circuit switching scheme.

### Brief Description of Drawings

FIG. 1 is a schematic configuration diagram of a mobile communication system according to Embodiment 1;
FIG. 2 is a diagram showing an example of a correspondence table between "eMLPP Priority" and "ARP" according to Embodiment 1;
FIG. 3 is a schematic diagram illustrating CS fallback operation according to Embodiment 1;
FIG. 4 is a sequence diagram illustrating CS fallback operation according to Embodiment 1; and
FIG. 5 is a sequence diagram illustrating CS fallback operation according to Modification 1.

### Description of Embodiments

Embodiments of the invention will specifically be described below with reference to drawings.

### [Embodiment 1]

### <Configuration of a mobile communication system>

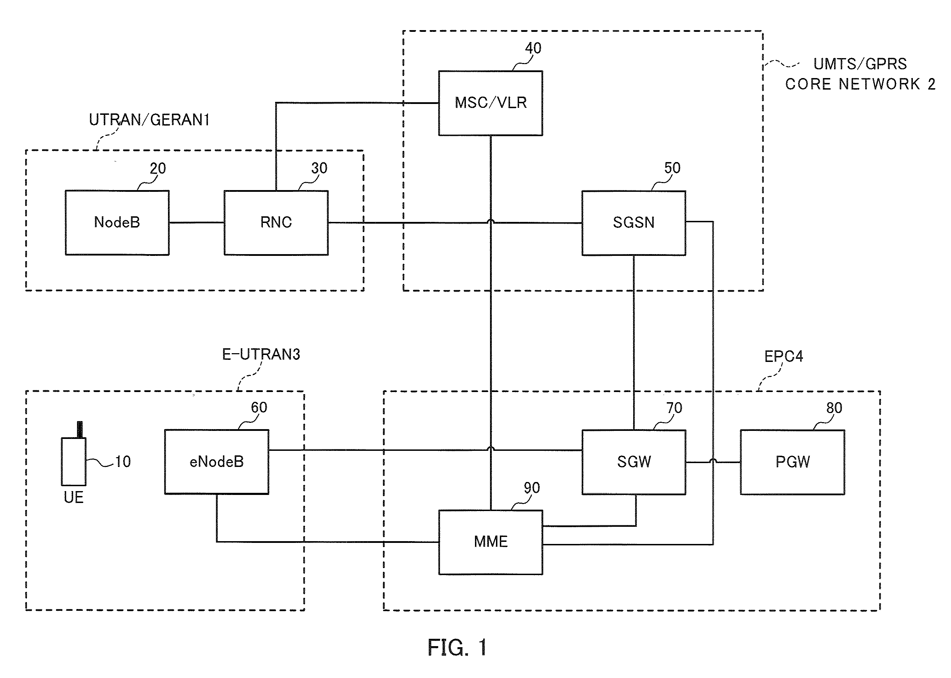

FIG. 1 is a schematic configuration diagram of a mobile communication system according to Embodiment 1. As shown in FIG. 1, the mobile communication system includes UTRAN/GERAN 1 that is a radio access network of a UTRAN/GERAN scheme (second communication scheme), UMTS (Universal Mobile Telecommunication System) /GPRS (General Packet Radio Service) core network 2 that is a core network supporting the UTRAN/GERAN scheme, E-UTRAN (Evolved-UTRAN) 3 that is a radio access network of an LTE scheme (first communication scheme), and EPC (Evolved Packet Core) 4 that is a core network supporting the LTE scheme.

In the mobile communication system as shown in FIG. 1, a UE (User Equipment) 10 is a radio communication terminal capable of communicating by both the UTRAN/GERAN scheme and the LTE scheme, and for example, is a cellular telephone terminal, notebook computer or the like.

The UTRAN/GERAN 1 is provided with a NodeB 20 that is a radio base station that performs radio communications with the UE 10 using the UTRAN/GERAN scheme, and an RNC (Radio Network Controller) 30 that controls radio communications between the UE 10 and the NodeB 20.

The UMTS/GPRS core network 2 is provided with an MSC (Mobile-Services Switching Center)/VLR (Visitor Location Register) 40 (mobile switching station) that performs circuit switching processing for voice communications of the UE 10, and an SGSN (Serving GPRS Support Node) 50 that performs packet switching processing for packet communications of the UE 10. The MSC/VLR 40 is connected to the RNC 30 via Iu-CS interface. Meanwhile, the SGSN 50 is connected to the RNC 30 via Iu-PS interface.

The E-UTRAN 3 is provided with an eNodeB 60 that performs radio communications with the UE 10 using the LTE scheme.

The EPC 4 is provided with an SGW (Serving Gateway) 70 that is a connection point of a U plane with the E-UTRAN 3, a PGW (Packet Data Network Gateway) 80 that is a connection point with an IP service network (not shown), andanMME (Mobility Management Equipment) 90 (mobility management apparatus) that performs mobility control of the UE 10. The SGW 70 is connected to the eNodeB 60 via S1-U interface, while being connected to the PGW 80 via S5/S8 interface. Further, the SGW 70 is connected to the MME 90 via S11 interface. Furthermore, the SGW 70 is connected to the SGSN 50 of the UMTS/GPRS core network 2 via S4 interface. The MME 90 is connected to the MSC/VLR 40 via Gs interface. Further, the MME 90 is connected to the SGSN 50 via S3 interface.

In the mobile communication system as shown in FIG. 1, when the MSC/VLR 40 of the UMTS/GPRS core network 2 receives a call reception signal to the UE 10 locating in the E-UTRAN 3, CS fallback processing of the UE 10 is performed.

More specifically, in the CS fallback processing, the MME 90 of the EPC 4 receives a "Paging Request" (paging request signal) from the MSC/VLR 40 of the UMTS/GPRS core network 2. In response to the "Paging Request", the MME 90 sends "Paging" (paging signal) to the eNodeB 60 of a location registration area group of the UE 10. The MME 90 receives "Extended Service Request" (connection request signal) for requesting connection to the MSC/VLR 40 from the UE 10 receiving the "Paging".

Further, in response to the "Extended Service Request" from the UE 10, the MME 90 sets "ARP (Allocation and Retention Priority)" based on "eMLPP (Enhanced Multi-Level Precedence and Pre-emption) Priority" included in the "Paging Request" received from the MSC/VLR 40.

Herein, the "eMLPP Priority (multi-level priority)" indicates a priority of multi-level set on the call reception signal received in the MSC/VLR 40 of the UMTS/GPRS core network 2. Meanwhile, the "ARP" is a priority of multi-level to establish "E-RAB (EPS Radio Access Bearer)", described later. The "eMLPP Priority" and the "ARP" are set at different values, even though the priorities are of the same level. Therefore, the MME 90 sets the "ARP" so as to indicate the priority of the same level as the priority indicated by the "eMLPP Priority".

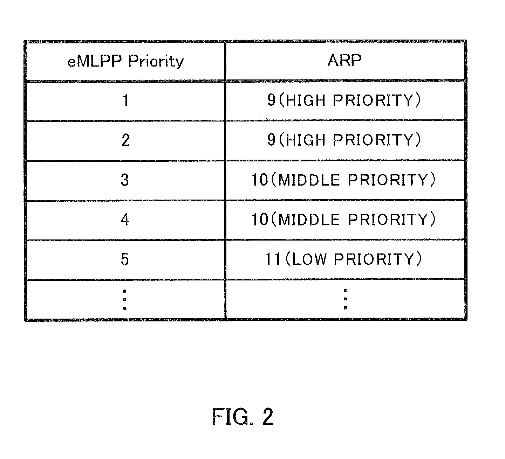

FIG, 2 is a diagram showing an example of a correspondence table between "eMLPP Priority" and "ARP" held in the MME 90. As shown in FIG. 2, the correspondence table associates a value of "eMLPP Priority" with a value of "ARP" indicative of the priority of the same level as the priority indicated by the value of "eMLPP Priority" to store. For example, when "1" is set on the "eMLPP Priority" included in the "Paging Request" received from the MSC/VLR 40, the MME 90 refers to the correspondence table, and sets the "ARP" at "9 (high priority) " indicating the priority of the same level as the priority of "1" of the "eMLPP Priority".

In addition, the "ARP" may include information items of "Priority Level", "Pre-emption Capability" and "Pre-emption Vulnerability". In this case, the MME 90 refers to the correspondence table as shown in FIG. 2, and sets the "Priority Level" of the "ARP" at a value indicative of the priority of the same level as the priority indicated by the "eMLPP Priority". Further, for example, the MME 90 may set the "Pre-emption Capability" of the "ARP" at "may trigger pre-emption" for releasing other bearer resources of a low priority to start a procedure for forcibly acquire resources. Furthermore, for example, the MME 90 may set the "Pre-emption Vulnerability" of the "ARP" at "not re-emptable" indicative of not being a bearer targeted for forcible resource release caused by another bearer resource request.

The MME 90 sends "S1AP: Initial Context Setup" (switch request signal) including the "ARP" set as described above to the eNodeB 60. The eNodeB 60 establishes "E-RAB" according to the "ARP" included in the "S1AP: Initial Context Setup".

Herein, "E-RAB" is a radio access bearer of the LTE scheme set between the UE 10 and the SGW 70 via the eNodeB 60. The UE 10 of the idle state first establishes the "E-RAB", and then, performs handover from the eNodeB 60 to the NodeB 20. In such handover, the UE 10 releases the above-mentioned "E-RAB" , and establishes "RAB: Radio Access Bearer" between the UE 10 and the SGW 70 via the NodeB 20, RNC 30 and SGSN 50. The "RAB" is a radio access bearer of the UTRAN/GERAN scheme set between the UE 10 and the SGW 70 via the NodeB 20, RNC 30 and SGSN 50. By such handover, the communication scheme of the UE 10 is switched from the LTE scheme to the UTRAN/GERAN scheme, and the UE 10 performs call reception processing of the call reception signal received in the MSC/VLR of the UMTS/GPRS core network 2.

As described above, in the mobile communication system as shown in FIG. 1, it is possible to establish the "E-RAB" according to the "eMLPP Priority" indicative of the priority set on the call reception signal received in the MSC/VLR 40 of the UMTS/GPRS core network 2. Accordingly, when a call reception signal of a high priority is received in the MSC/VLR 40, it is possible to prevent the UE 10 of the idle state from failing the CS fallback processing by failure of establishment of the "E-RAB".

In addition, in the mobile communication system as shown in FIG. 1, the E-UTRAN 3 may be a radio access network such as an LTE-Advanced scheme, Beyond-LTE scheme, Wimax (Worldwide Interoperability for Microwave Access) scheme and wireless LAN scheme. Further, the correspondence table as shown in FIG. 2 may be held in a storage section of the MME 90, or may be achieved by a program installed in the MME 90.

### <Operation of the mobile communication system>

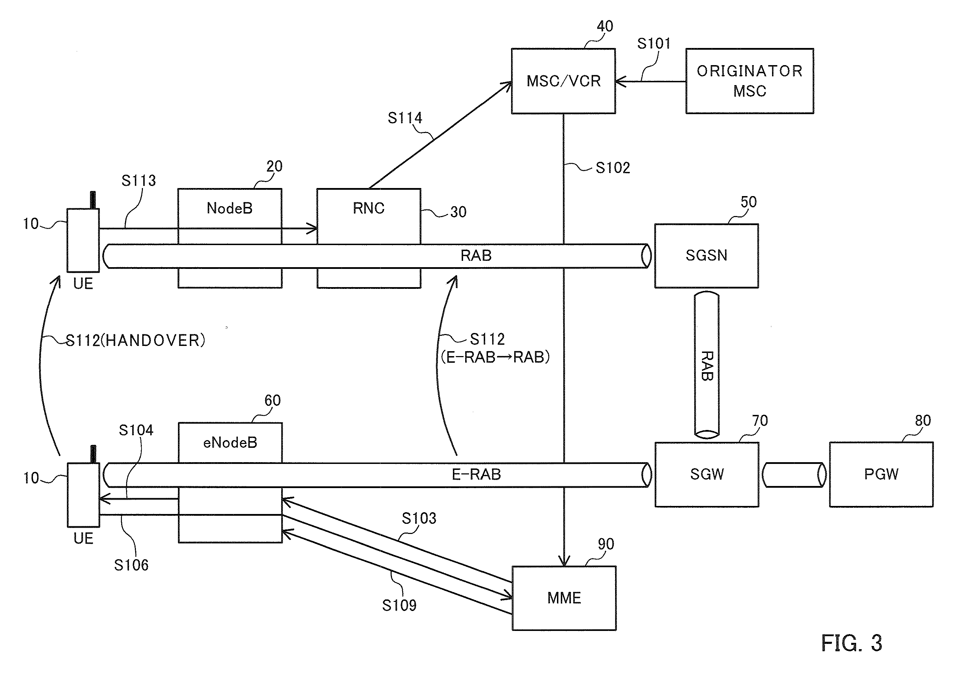

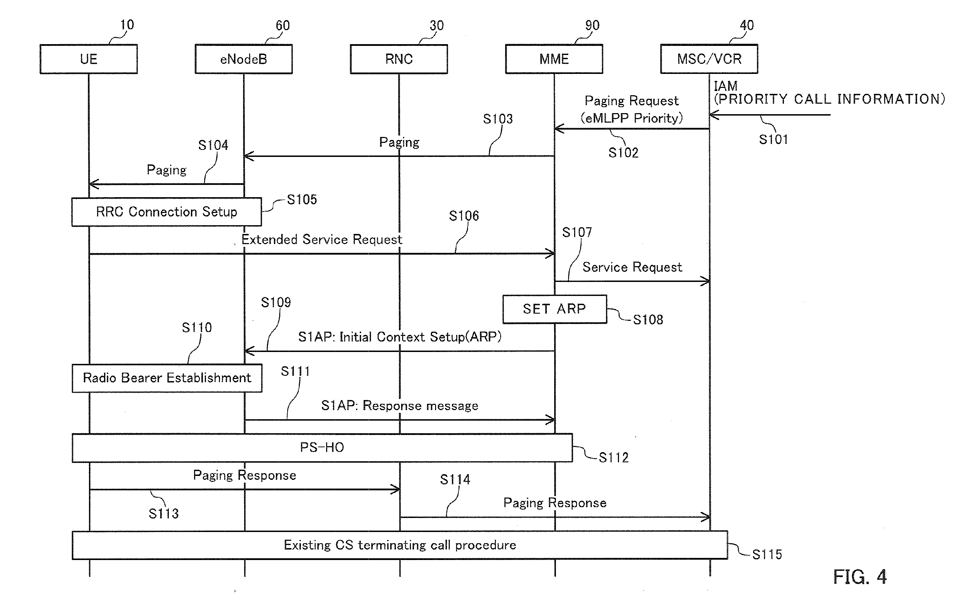

Referring to FIGs. 3 and 4, described next is operation of the mobile communication system according to Embodiment 1 configured as described above.

FIGs. 3 and 4 are a schematic diagram and sequence diagram of CS fallback operation in the mobile communication system according to Embodiment 1. In addition, at the start time in FIGs. 3 and 4, it is assumed that the UE 10 is in an idle state, and releases the established "E-RAB". Further, in FIG. 3, indication of steps S105, S107, S108, S110, S111 and S115 as described in FIG. 4 is omitted. Further, indication of SGSN 50, SGW 70 and PGW 80 as described in FIG. 3 is omitted in FIG. 4.

As described in FIGs. 3 and 4, the MSC/VLR 40 of the UMTS/GPRS core network 2 receives "IAM (Initial Address Message") including priority call information from the MSC of the originator via the GMSC (Gateway MSC), not shown (step S101). Herein, the "IAM" is a call reception signal of the circuit switching scheme to the UE 10. Further, the priority call information included in the "IAM" indicates the priority of multi-level set on the call reception signal.

The MSC/VLR 40 sends "Paging Request" including "eMLPP Priority" corresponding to the priority call information included in the received "IAM" to the MME 90 of the EPC 4 (step S102). Herein, the "Paging Request" is a paging request signal to request to page the UE 10. Further, the "eMLPP Priority" corresponds to the priority call information included in the "IAM", and as described above, indicates the priority of multi-level set on the call reception signal received in the MSC/VLR 40.

In response to the "Paging Request" received from the MSC/VLR 40, the MME 90 sends "Paging" to the eNodeB 60 of the location registration area group in which the UE 10 locates (step S103). Herein, the "Paging" is a paging signal to page the UE 10.

The eNodeB 60 sends the "Paging" received from the MME 90 to the UE 10 (step S104). In response to the "Paging" received from the eNodeB 60, the UE 10 performs processing for setting RRC connection with the eNodeB 60 (step S105).

Upon completing the processing for setting RRC connection with the eNodeB 60, the UE 10 sends "Extended Service Request" to the MME 90 (step S106). Herein, the "Extended Service Request" is a connection request signal for the UE 10 to request connection to the MSC/VLR 40.

In response to the "Extended Service Request" received from the UE 10, the MME 90 sends "Service Request" to the MSC/VLR 40 (step S107).

The MME 90 performs processing for setting the "ARP", based on the "eMLPP Priority" included in the "Paging Request" received in step S102 (step S108). More specifically, the MME 90 refers to the correspondence table as shown in FIG. 2, and sets the "ARP" so as to indicate the priority of the same level as the priority indicated by the "eMLPP Priority". In addition, as described above, the "ARP" is the priority of multi-level to establish the "E-RAB", and as described later, is used as a priority of multi-level to establish the "RAB" of the UTRAN/GERAN scheme.

TheMME90sends, to the eNodeB 60, "S1AP: Initial Context Setup" including the set "ARP" and "CS Fallback Indicator" (step S109). Herein, the "S1AP: Initial Context Setup" is a handover request signal for requesting establishment of the "E-RAB" and indicating handover of the UE 10 from the eNodeB 60 to the NodeB 20, i.e. a switch request signal for requesting to switch the communication scheme of the UE 10 from the LTE scheme to the UTRAN/GERAN scheme. Further, the "CS Fallback Indicator" is information indicating that the handover request is caused by the call reception signal to the UE 10 received in the MSC/VLR 40.

In response to the "S1AP: Initial Context Setup" received from the MME 90, the eNodeB 60 performs processing for establishing "EPS RB (EPS Radio Bearer) " between the eNodeB 60 and the UE 10 (step S110). Herein, the "EPS RB" is a radio bearer set between the UE 10 and the eNodeB 60, and constitutes a part of the above-mentioned "E-RAB". More specifically, the eNodeB 60 allocates radio resources to the UE 10 according to the priority indicated by the "ARP" included in the "S1AP: Initial Context Setup", and using the allocated radio resources, establishes the "EPS RB" between the UE 10 and the eNodeB 60.

Upon establishing the "EPS RB" between the UE 10 and the eNodeB 60, the eNodeB 60 sends "S1AP: Response message" indicative of the establishment to the MME 90 (step S111). As described above, the eNodeB 60 notifies the MME 90 that the "EPS RB" constituting a part of the "E-RAB" is established according to the priority indicated by the "ARP" and that the establishment is completed, and the "E-RAB" is thereby established between the UE 10 and the SGW 70 as shown in FIG. 3.

When the "E-RAB" is established between the UE 10 and the SGW 70, handover of the UE 10 from the eNodeB 60 to the NodeB 20 is performed (step S112). In such handover, as shown in FIG. 3, the UE 10 releases the "E-RAB" established between the UE 10 and the SGW 70, and establishes the "RAB" between the UE 10 and the SGW 70 via the SGSN 50, etc. according to the priority indicated by the "ARP". Further, by such handover, the communication scheme of the UE 10 is switched from the LTE scheme to the UTRAN/GERAN scheme.

When the communication scheme of the UE 10 is switched from the LTE scheme to the UTRAN/GERAN scheme, the UE 10 sends "Paging Response" to the RNC 30 (step S113). Herein, the "Paging Response" is a response signal to the "Paging" sent from the MME 90.

The RNC 30 sends the "Paging Response" received from the UE 10 to the MSC/VLR 40 (step S114). Upon receiving the "Paging Response" from the RNC 30, the MSC/VLR 40 performs the call reception processing corresponding to the "IAM" received in step S101 with the UE 10 (step S115).

### <Effect>

According to the mobile communication system according to Embodiment 1, when a priority of multi-level is set on a call reception signal received in the MSC/VLR 40 of the UMTS/GPRS core network 2, the "ARP" is set so as to indicate the priority of the same level as the priority of multi-level, and the "E-RAB" is established according to the set "ARP". Accordingly, when a call reception signal of a high priority is received in the MSC/VLR 40, it is possible to prevent the occurrence of CS fallback processing failure due to failure of establishment of the "E-RAB".

### [Modification 1]

Described next is a mobile communication system according to Modification 1, focusing on differences from Embodiment 1. In Modification 1, the MME 90 sets "E-RAB acquisition priority information" so as to indicate the priority of the same level as the priority indicated by the "eMLPP Priority".

The "E-RAB acquisition priority information" is a priority of multi-level to establish the "E-RAB". The "ARP" of Embodiment 1 is used as the priority of multi-level to establish both the "E-RAB" of the LTE scheme and the "RAB" of the UTRAN/GERAN scheme. In contrast thereto, the "E-RAB acquisition priority information" according to Modification 1 is used as the priority of multi-level to establish only the "E-RAB" of the LTE scheme.

The MME 90 sets the "E-RAB acquisition priority information" so as to indicate the priority of the same level as the priority indicated by the "eMLPP Priority" included in the "Paging Request". In addition, when the priorities of the same level are set at the same value in the "eMLPP Priority" and "E-RAB acquisition priority information", the MME 90 sets the value of the "eMLPP Priority" on the "E-RAB acquisition priority information" without any modification. Meanwhile, when the priorities of the same level are set at different values in the "eMLPP Priority" and "E-RAB acquisition priority information", as in FIG. 2 in Embodiment 1, the MME 90 holds a correspondence table between "eMLPP Priority" and "E-RAB acquisition priority information", and sets the "E-RAB acquisition priority information" at a value corresponding to the value of the "eMLPP Priority". Further, the E-RAB acquisition priority information may be of an information configuration similar to the "ARP" of Embodiment 1. Furthermore, the E-RAB acquisition priority information may be of a level to perform priority reservation of radio resources to establish the "E-RAB", a priority reservation effective time that is a time to prevent radio resources reserved by the priority reservation from being used to establish another bearer, and the like.

### <Operation of the mobile communication system>

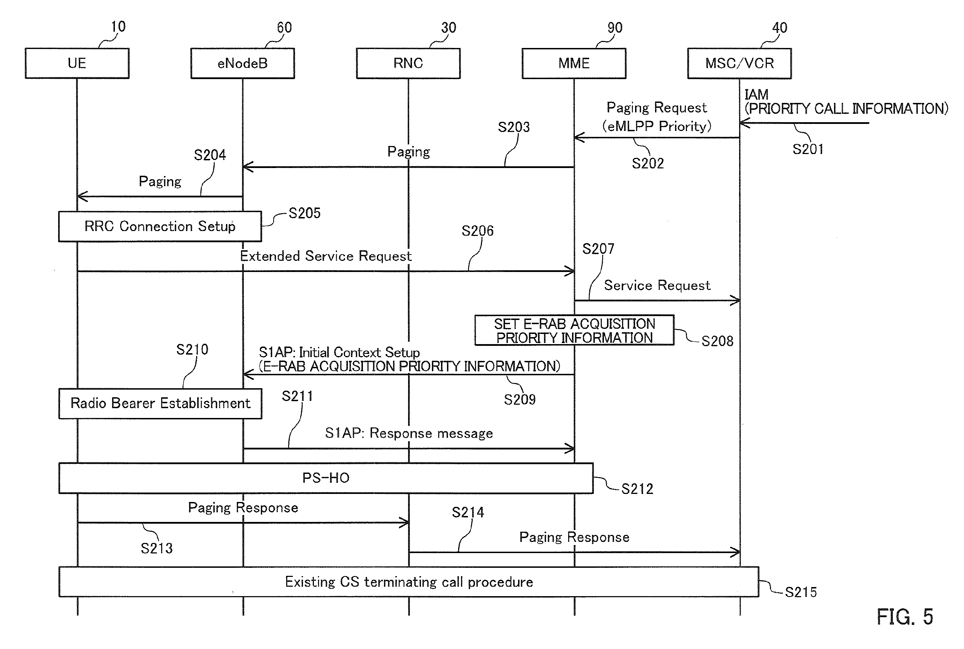

FIG. 5 is a sequence diagram illustrating CS fallback operation in the mobile communication system according to Modification 1. In addition, steps S201 to S207 in FIG. 5 are the same as steps S101 to S107 in FIG.4, and descriptions thereof are omitted.

The MME 90 performs processing for setting the "E-RAB acquisition priority information", based on the "eMLPP Priority" included in the "Paging Request" received in step S202 (step S208). More specifically, the MME 90 sets the "E-RAB acquisitionpriority information" so as to indicate the priority of the same level as the priority indicated by the "eMLPP Priority". For example, the "E-RAB acquisition priority information" may be of the same information configuration as the ARP, a level to perform priority reservation, or/and a priority reservation effective time (time to guard to prevent allocated resources from being used to establish another bearer).

TheMME90sends, to the eNodeB60, "S1AP: Initial Context Setup" including the set "E-RAB acquisition priority information" (step S209).

In response to the "S1AP: Initial Context Setup" received from the MME 90, the eNodeB 60 performs processing for establishing the "EPS RB" between the eNodeB 60 and the UE 10 (step S210). More specifically, the eNodeB 60 allocates radio resources to the UE 10 according to the priority indicated by the "E-RAB acquisition priority information" included in the "S1AP: Initial Context Setup", and using the allocated radio resources, establishes the "EPS RB" between the UE 10 and the eNodeB 60.

Upon establishing the "EPS RB" between the UE 10 and the eNodeB 60, the eNodeB 60 sends "S1AP: Response message" indicative of the establishment to the MME 90 (step S211). As described above, the eNodeB 60 notifies the MME 90 that the "EPS RB" constituting a part of the "E-RAB" is established corresponding to the "E-RAB acquisition priority information" and that the establishment is completed, and the "E-RAB" is thereby established between the UE 10 and the SGW 70.

When the "E-RAB" is established between the UE 10 and the SGW 70, handover of the UE 10 from the eNodeB 60 to the NodeB 20 is performed (step S212). In such handover, the UE 10 releases the "E-RAB" established between the UE 10 and the SGW 70, and establishes the "RAB" between the UE 10 and the SGW 70 via the SGSN 50, etc. according to the "ARP".

In addition, in step S208 of Modification 1, a value corresponding to the "eMLPP Priority" is not set on the "ARP". Further, as described above, since the "E-RAB acquisition priority information" is the priority of multi-level to establish the "E-RAB" of the LTE scheme, in step S212 of Modification 1, establishment of the "RAB" of the UTRAN/GERAN scheme is performed without following the "eMLPP Priority". Further, when the "E-RAB acquisition priority information" is different from information of the "ARP", bearer management according to the "E-RAB acquisition priority information" may be performed in LTE radio communications until the handover is performed.

Steps S213 to S215 are the same as steps S113 to S115 in FIG. 4, and descriptions thereof are omitted.

### <Effect>

According to the mobile communication system according to Modification 1, when a priority of multi-level is set on a call reception signal received in the MSC/VLR 40 of the UMTS/GPRS core network 2, the "E-RAB acquisition priority information" is set so as to indicate the priority of the same level as the priority of multi-level, and the "E-RAB" is established according to the set "E-RAB acquisition priority information". Accordingly, when a call reception signal of a high priority is received in the MSC/VLR 40, it is possible to prevent the occurrence of CS fallback processing failure due to failure of establishment of the "E-RAB".

Further, in Modification 1, since the value of the "ARP" is not changed, it is possible to perform priority control only on the "E-RAB" establishment processing required for the CS fallback processing, corresponding to the priority of multi-level set on the call reception signal received in the MSC/VLR. More specifically, without applying the above-mentioned priority control to the processing (handover) for switching the established "E-RAB" to the packet bearer "RAB" in addition to the processing for establishing the "E-RAB" as in the case where the value of the "E-RAB" is changed, in Modification 1, it is possible to apply the above-mentioned priority control only to the processing for establishing the "E-RAB" that is minimally required for the CS fallback processing.

### [Other Embodiments]

The present invention is specifically described using the above-mentioned Embodiments, but it is obvious to a person skilled in the art that the invention is not limited to the Embodiments described in the Description. The invention is capable of being carried into practice as modified and updated aspects without departing from the subject matter and scope of the invention defined by the descriptions of the scope of the claims. Accordingly, the descriptions of the Description are intended for illustrative explanation, and do not have any restrictive meaning to the invention.

The present application is based on Japanese Patent Application No. 2010-128774 filed on June 4 , 2010, entire content of which is expressly incorporated by reference herein.

## Claims

1. A mobile communication method comprising the steps of:
in a mobility management apparatus of a first communication scheme, receiving a connection request signal for requesting connection to a mobile switching station, from a mobile terminal that receives a paging signal sent in response to a paging request signal from the mobile switching station of a second communication scheme;
in the mobility management apparatus, setting a priority to establish a bearer of the first communication scheme based on a multi-level priority included in the paging request signal from the mobile switching station, in response to the connection request signal from the mobile terminal;
in the mobility management apparatus, sending a switch request signal, which includes the set priority and requests to switch a communication scheme of the mobile terminal from the first communication scheme to the second communication scheme, to a radio base station of the first communication scheme;
in the radio base station, establishing a bearer of the first communication scheme by the priority included in the switch request signal; and
switching the communication scheme of the mobile terminal from the first communication scheme to the second communication scheme.

2. The mobile communication method according to claim 1, wherein the step of switching the communication scheme of the mobile terminal from the first communication scheme to the second communication scheme includes the step of establishing a bearer of the second communication scheme, according to the priority included in the switch request signal.

3. The mobile communication method according to claim 1, wherein the step of switching the communication scheme of the mobile terminal from the first communication scheme to the second communication scheme includes the step of establishing a bearer of the second communication scheme, without following the priority included in the switch request signal.

4. A mobility management apparatus of a first communication scheme, comprising:
a reception section configured to receive a connection request signal for requesting connection to a mobile switching station, from a mobile terminal that receives a paging signal sent in response to a paging request signal from the mobile switching station of a second communication scheme;
a set section configured to set a priority to establish a bearer of the first communication scheme based on a multi-level priority included in the paging request signal from the mobile switching station, in response to the connection request signal from the mobile terminal; and
a transmission section configured to send a switch request signal, which includes the set priority and requests to switch a communication scheme of the mobile terminal from the first communication scheme to the second communication scheme, to a radio base station of the first communication scheme.

5. The mobility management apparatus according to claim 4, wherein based on the multi-level priority, the set section is configured to set a priority to establish a bearer of the second communication scheme in addition to the bearer of the first communication scheme.

6. The mobility management apparatus according to claim 4, wherein based on the multi-level priority, the set section is configured to set a priority to establish the bearer of the first communication scheme.

7. A radio base station of a first communication scheme, comprising:
a reception section configured to receive a switch request signal for requesting to switch a communication scheme of a mobile terminal from the first communication scheme to a second communication scheme, from a mobility management apparatus of the first communication scheme; and
an establishment processing section configured to perform processing for establishing a bearer of the first communication scheme in response to the switch request signal,
wherein the switch request signal includes a priority to establish the bearer of the first communication scheme, the priority set based on a multi-level priority included in a paging request signal from a mobile switching station of the second communication scheme, and
the establishment processing section is configured to perform the processing for establishing the bearer of the first communication scheme by the priority included in the switch request signal.
